# DEMANDE DE BREVET EUROPEEN

(11) **EP 3 222 877 A1**
(43) Date de publication de la demande: **27.09.2017**
(21) Numéro de dépôt: 17161248.4
(22) Date de dépôt: 16.03.2017
(51) Int. Cl.: F16F 15/14

(54) **DISPOSITIF D'AMORTISSEMENT PENDULAIRE**

(30) Priorité: 21.03.2016 FR 1652374
(71) Demandeur: Valeo Embrayages, 80009 Amiens Cedex 2 (FR)
(72) Inventeur: SALVADORI, David, 60530 LE MESNIL EN THELLE (FR); ROUZE, Guillaume, 62000 ARRAS (FR); MAHE, Hervé, 80480 SALOUEL (FR); VERHOOG, Roel, 60190 GOURNAY SUR ARONDE (FR)
(74) Mandataire: Cardon, Nicolas

(57) **Abrégé**

Dispositif d'amortissement pendulaire (1) pour système de transmission, comprenant ;
- un support (2) mobile autour d'un axe de rotation (X),
- au moins un corps pendulaire (3), mobile par rapport au support (2) et,
- un système d'atténuation (30) du bruit se produisant lors d'un choc du corps pendulaire (3) contre le support (2), comprenant une couche en plastique (31) serrée axialement entre le support (2) et une pièce de serrage (32).

## Description

La présente invention concerne un dispositif d'amortissement pendulaire, notamment pour un système de transmission de véhicule automobile.

Dans une telle application, le dispositif d'amortissement pendulaire peut être intégré à un système d'amortissement de torsion d'un embrayage apte à relier sélectivement le moteur thermique à la boîte de vitesses, afin de filtrer les vibrations dues aux acyclismes du moteur. Un tel système d'amortissement de torsion est par exemple un double volant amortisseur.

En variante, dans une telle application, le dispositif d'amortissement pendulaire peut être intégré à un disque de friction de l'embrayage ou à un convertisseur de couple hydrodynamique ou à un volant solidaire du vilebrequin ou à un double embrayage à sec ou humide.

Un tel dispositif d'amortissement pendulaire met classiquement en oeuvre un support et un ou plusieurs corps pendulaires mobiles par rapport à ce support, le déplacement par rapport au support de chaque corps pendulaire étant guidé par deux organes de roulement coopérant d'une part avec des pistes de roulement solidaires du support, et d'autre part avec des pistes de roulement solidaires du corps pendulaire.

Lors du démarrage ou lors de l'arrêt du moteur thermique du véhicule, de faibles régimes peuvent entraîner une désynchronisation des corps pendulaires par rapport au support, de sorte que ces corps pendulaires peuvent chuter radialement et venir frapper contre le support. Un tel choc peut occasionner des vibrations du support et/ou des bruits non souhaitables. De tels bruits et/ou de telles vibrations non souhaitables peuvent aussi se produire lors de chocs entre corps pendulaire et support à l'issue du déplacement de ce corps pendulaire pour filtrer une oscillation de torsion.

Il existe un besoin pour réduire, notamment supprimer, les inconvénients ci-dessus se produisant notamment lors de chute(s) radiale(s) d'un corps pendulaire sur le support d'un dispositif d'amortissement pendulaire.

L'invention a pour objet de répondre à ce besoin et elle y parvient, selon un premier aspect, à l'aide d'un dispositif d'amortissement pendulaire pour système de transmission, comprenant ;
- un support mobile autour d'un axe de rotation,
- au moins un corps pendulaire, mobile par rapport au support et,
- un système d'atténuation du bruit se produisant lors d'un choc du corps pendulaire contre le support, comprenant une couche en plastique serrée axialement entre le support et une pièce de serrage.

La présence de la couche en plastique serrée axialement permet de filtrer les vibrations résultant du choc du corps pendulaire contre le support, tel que lors d'une chute radiale, et ainsi de réduire, voir éliminer les bruits associés à ces vibrations. Des fréquences comprises entre 1000 Hz et 3000 Hz peuvent par exemple être filtrées.

On remédie ainsi aux problèmes identifiés ci-dessus se produisant par exemple lors du démarrage ou lors de l'arrêt du moteur thermique du véhicule.

Le système d'atténuation du bruit peut être porté par le support, étant par exemple fixé sur le support.

Le serrage axial de la couche en plastique entre le support et la pièce de serrage peut exister en permanence, dès lors que le dispositif d'amortissement pendulaire est assemblé.

Au sens de la présente demande :
- « axialement » signifie « parallèlement à l'axe de rotation du support »,
- « radialement » signifie « le long d'un axe appartenant à un plan orthogonal à l'axe de rotation du support et coupant cet axe de rotation du support»,
- « angulairement » ou « circonférentiellement » signifie « autour de l'axe de rotation du support »,
- « orthoradialement » signifie « perpendiculairement à une direction radiale »,
- « solidaire » signifie « rigidement couplé », et
- la position de repos d'un corps pendulaire est celle dans laquelle ce corps pendulaire est centrifugé sans être soumis à des oscillations de torsion provenant des acyclismes du moteur thermique.

Le plastique est par exemple de l'élastomère. La pièce de serrage est par exemple une tôle, pouvant être réalisée en acier.

La dimension axiale de la couche en plastique est par exemple supérieure à celle de la pièce de serrage.

La couche en plastique peut s'étendre de manière continue autour de l'axe de rotation et la pièce de serrage peut également s'étendre de façon continue autour de cet axe de rotation.

La couche en plastique forme par exemple une plaque s'étendant radialement entre un contour radialement intérieur circulaire et un contour radialement extérieur circulaire.

La pièce de serrage peut également être définie par une plaque s'étendant radialement entre un contour radialement intérieur circulaire et un contour radialement extérieur circulaire. Le cas échéant, le support peut également présenter un contour radialement intérieur circulaire et le rayon du contour radialement intérieur du support, le rayon du contour radialement intérieur de la couche en plastique, et le rayon du contour radialement intérieur de la pièce de serrage peuvent être sensiblement égaux.

En variante, la couche en plastique peut s'étendre de manière discontinue et la pièce de serrage peut également s'étendre de manière discontinue. Le système d'atténuation du bruit peut alors se présenter sous la forme d'une pluralité de plots à distance les uns des autres, ces plots comprenant chacun une portion en plastique et une portion de serrage serrant axialement cette portion en plastique contre le support.

Le serrage axial de la couche en plastique peut être obtenu par vissage ou rivetage de la pièce de serrage avec le support alors que la couche en plastique est positionnée entre le support et la pièce de serrage. On assure ainsi une mise en compression axiale de la couche en plastique.

En variante, le serrage axial de la couche en plastique peut être obtenu par rivetage d'une ou plusieurs entretoises sur le support et/ou sur la pièce de serrage, la couche en plastique ayant préalablement été surmoulée sur cette ou ces entretoises. Ces entretoises sont par exemple réparties uniformément sur le support, autour de l'axe de rotation. Il peut ainsi exister trois entretoises, chacune étant reçue dans un trou ménagé dans le support et ces trois trous faisant deux à deux un angle mesuré depuis l'axe de rotation qui est égal à 120°. Le surmoulage de la couche en plastique sur la ou les entretoises peut avoir lieu alors que cette ou ces entretoises sont déjà montées sur le support. En variante, ce surmoulage peut avoir lieu avant montage de la ou les entretoises sur le support.

Selon un premier exemple de mise en oeuvre de l'invention, la couche en plastique n'est disposée axialement que d'un côté du support.

Le dispositif peut selon un deuxième exemple de mise en oeuvre de l'invention comprendre :
- une couche en plastique disposée axialement du premier côté du support et serrée axialement entre ce premier côté et une première pièce de serrage, et
- une couche en plastique disposée axialement du deuxième côté du support et serrée axialement entre ce deuxième côté et une deuxième pièce de serrage.

Selon ce deuxième exemple de mise en oeuvre, on peut ainsi observer successivement, lorsque l'on se déplace axialement : une pièce de serrage disposée du premier côté du support, une couche en plastique disposée du premier côté du support, le support, une couche en plastique disposée du deuxième côté du support, et une pièce de serrage disposée du deuxième côté du support.

Selon l'un ou l'autre des exemples de mise en oeuvre ci-dessus, le corps pendulaire peut comprendre une première masse pendulaire disposée axialement du premier côté du support et une deuxième masse pendulaire disposée axialement du deuxième côté du support, et au moins un organe de liaison de la première masse pendulaire et de la deuxième masse pendulaire.

Le support peut alors porter au moins une pièce d'interposition axiale disposée axialement en regard de la première masse pendulaire ou de la deuxième masse pendulaire, cette pièce d'interposition axiale étant notamment un revêtement déposé sur le support.

Une telle pièce d'interposition peut ainsi limiter le déplacement axial de la masse pendulaire par rapport au support, réduisant ainsi les chocs axiaux entre lesdites pièces, et ainsi une usure et des bruits non souhaités, notamment lorsque le support et/ou la masse pendulaire sont en métal.

Lorsque la pièce d'interposition est un revêtement, ce revêtement peut participer à la filtration des vibrations dues au choc du corps pendulaire sur le support. Ce revêtement est par exemple du Deltaflon^{™} commercialisé par la société Fluorotechnique^{(R)}. Un tel revêtement met en oeuvre du PTFE. Le revêtement peut être appliqué sur le support par projection, par électrolyse ou par phase vapeur.

En variante, la pièce d'interposition axiale peut être un patin porté par le support. Ce patin peut être en plastique et être accroché sur le support via une ou plusieurs pattes de fixation montées dans un ou plusieurs trous du support.

Les pièces d'interposition peuvent être positionnées sur le support de manière à ce qu'il y ait toujours au moins une pièce d'interposition dont au moins une partie est axialement interposée entre une masse pendulaire et le support, quelles que soient les positions relatives du support et de ladite masse.

La présence de cette pièce d'interposition peut, selon le premier exemple de mise en oeuvre ci-dessus, faire que l'on observe successivement, lorsque l'on se déplace axialement : une pièce de serrage, une couche en plastique, la pièce d'interposition et le support. La pièce d'interposition peut par exemple être décalée angulairement.

Selon le deuxième exemple de mise en oeuvre de l'invention, on peut alors observer lorsque l'on se déplace axialement : une pièce de serrage disposée du premier côté du support, une couche en plastique disposée du premier côté du support, une pièce d'interposition portée par le support sur son premier côté, le support, le cas échéant une pièce d'interposition portée par le support sur son deuxième côté, une couche en plastique disposée du deuxième côté du support, et une pièce de serrage disposée du deuxième côté du support.

Dans tout ce qui précède, la couche en plastique peut être positionnée radialement à l'intérieur du corps pendulaire et former une butée pour le déplacement radialement vers l'intérieur de ce corps pendulaire. La couche en plastique et le corps pendulaire sont par exemple disposés l'un par rapport de manière à empêcher tout chevauchement radial entre ladite couche et ledit corps pendulaire. La couche en plastique joue alors le rôle additionnel d'organe d'amortissement de la venue en butée du corps pendulaire lors d'une chute radiale, renforçant encore l'atténuation du bruit lié à ce choc que cette couche en plastique permet déjà par sa présence à l'état comprimé entre le support et la pièce de serrage.

La couche en plastique peut encore permettre d'amortir la venue en butée du corps pendulaire contre le support dans les positions suivantes :
- la position à l'issue d'un déplacement dans le sens trigonométrique de ce corps pendulaire depuis la position de repos pour filtrer une oscillation de torsion, et/ou
- la position à l'issue d'un déplacement dans le sens non-trigonométrique de ce corps pendulaire depuis la position de repos pour filtrer une oscillation de torsion.

En variante, un organe d'amortissement de butée complémentaire à l'action précitée de la couche en plastique peut être prévu pour chaque corps pendulaire. Cet organe d'amortissement de butée complémentaire est alors porté par le corps pendulaire et apte à venir simultanément en contact avec le corps pendulaire et le support pour tout ou partie des positions relatives précitées du corps pendulaire par rapport au support.

Chaque organe d'amortissement de butée complémentaire peut être dédié à un organe de liaison du corps pendulaire et porté par ce dernier. Chaque organe d'amortissement de butée complémentaire peut présenter des propriétés élastiques permettant l'amortissement des chocs liés au contact entre le support et le corps pendulaire. Cet amortissement est alors permis par une compression de l'organe d'amortissement de butée complémentaire, ce dernier étant par exemple en élastomère ou en caoutchouc.

Le déplacement du corps pendulaire par rapport au support peut être guidé par au moins un organe de roulement, notamment deux organes de roulement auquel cas le dispositif d'amortissement est qualifié de « bifilaire ».

Chaque organe de roulement coopère par exemple avec au moins une première piste de roulement solidaire du support et avec au moins une deuxième piste de roulement solidaire du corps pendulaire. Chaque organe de roulement coopère par exemple avec la ou les pistes de roulement solidaires du support et avec la ou les pistes de roulement solidaires du corps pendulaire uniquement via sa surface extérieure.

Chaque organe de roulement est par exemple un rouleau de section circulaire dans un plan perpendiculaire à l'axe de rotation du support. Ce rouleau peut comprendre plusieurs portions cylindriques successives de rayon différent. Les extrémités axiales du rouleau peuvent être dépourvues de rebord annulaire fin. Le rouleau est par exemple réalisé en acier. Le rouleau peut être creux ou plein.

Selon une première réalisation préférée, l'organe de roulement coopère avec une seule première piste de roulement et avec une seule deuxième piste de roulement, et cette deuxième piste de roulement est définie par l'organe de liaison du corps pendulaire. Une portion du contour de cet organe de liaison définit par exemple la deuxième piste de roulement. En variante, un revêtement peut être déposé sur cette portion du contour de l'organe de liaison pour former la deuxième piste de roulement. Un tel organe de liaison est par exemple emmanché en force via chacune de ses extrémités axiales dans une ouverture ménagée dans une des masses pendulaires. En variante, l'organe de liaison peut être soudé ou vissé ou riveté via ses extrémités axiales sur chaque masse pendulaire.

Selon la première réalisation préférée, le déplacement de chaque corps pendulaire par rapport au support peut être guidé par au moins deux organes de roulement, notamment exactement deux organes de roulement. Deux organes de liaison coopérant chacun avec un organe de roulement peuvent être prévus.

Chaque organe de roulement peut alors être uniquement sollicité en compression entre les première et deuxième pistes de roulement mentionnées ci-dessus. Ces première et deuxième pistes de roulement coopérant avec un même organe de roulement peuvent être au moins en partie radialement en regard, c'est-à-dire qu'il existe des plans perpendiculaires à l'axe de rotation dans lesquels ces pistes de roulement s'étendent toutes les deux.

Selon la première réalisation préférée, chaque organe de roulement peut être reçu dans une fenêtre du support recevant déjà un organe de liaison et ne recevant aucun autre organe de roulement. Cette fenêtre est par exemple définie par un contour fermé dont une portion définit la première piste de roulement solidaire du support qui coopère avec cet organe de roulement.

Selon une deuxième réalisation préférée, l'organe de roulement coopère d'une part avec une seule première piste de roulement solidaire du support, et d'autre part avec deux deuxièmes pistes de roulement solidaires du corps pendulaire. Chaque masse pendulaire présente alors une ouverture dont une partie du contour définit une de ces deuxièmes pistes de roulement.

Selon cette autre réalisation préférée, chaque organe de liaison regroupe par exemple plusieurs rivets, et cet organe de liaison est reçu dans une fenêtre du support, tandis que l'organe de roulement est reçu dans une ouverture du support, distincte d'une fenêtre recevant un organe de liaison.

Selon cette autre réalisation préférée, deux organes de roulement peuvent guider le déplacement du corps pendulaire par rapport au support, et chaque organe de roulement coopère avec une première piste de roulement dédiée à cet organe de roulement et avec deux deuxièmes pistes de roulement dédiées à cet organe de roulement.

Selon cette autre réalisation préférée, chaque organe de roulement peut alors comprendre successivement axialement:
- une portion disposée dans une ouverture de la première masse pendulaire et coopérant avec la deuxième piste de roulement formée par une partie du contour de cette ouverture,
- une portion disposée dans une ouverture du support et coopérant avec la première piste de roulement formée par une partie du contour de cette ouverture, et
- une portion disposée dans une ouverture de la deuxième masse pendulaire et coopérant avec la deuxième piste de roulement formée par une partie du contour de cette ouverture.

En variante, selon l'un ou l'autre des exemples de mise en oeuvre ci-dessus, le dispositif d'amortissement pendulaire peut comprendre deux supports solidaires et décalés axialement, et le corps pendulaire peut ne comprendre qu'une seule masse pendulaire disposée axialement entre les deux supports, ou le cas échéant plusieurs masses pendulaires solidarisées entre elles et disposées axialement entre les deux supports. Dans ce cas, chaque support peut comprendre un système d'atténuation du bruit se produisant lors d'un choc du corps pendulaire contre ce support, ledit système comprenant une couche en plastique serrée axialement entre ce support et une pièce de serrage. Chaque système d'atténuation du bruit peut alors être porté par un support respectif, étant par exemple fixé sur ce support.

Chaque support présente par exemple un système d'atténuation positionné du côté en regard de l'autre support. La pièce de serrage peut alors être commune à un système d'atténuation porté par l'un de ces deux supports et à un système d'atténuation porté par l'autre de ces deux supports.

Dans tout ce qui précède, le dispositif comprend par exemple un nombre de corps pendulaires compris entre deux et huit, notamment trois, quatre, cinq ou six corps pendulaires. Tous ces corps pendulaires peuvent se succéder circonférentiellement. Le dispositif peut ainsi comprendre une pluralité de plans perpendiculaires à l'axe de rotation dans chacun desquels tous les corps pendulaires sont disposés.

Lorsque la couche en plastique s'étend de manière continue autour de l'axe de rotation du support, cette couche peut interagir fonctionnement avec l'ensemble des corps pendulaires.

Dans tout ce qui précède la forme des premières et des deuxièmes pistes de roulement précitées peut être telle que chaque corps pendulaire soit uniquement déplacé par rapport au support en translation autour d'un axe fictif parallèle à l'axe de rotation du support.

En variante, la forme des pistes de roulement peut être telle que chaque corps pendulaire soit déplacé par rapport au support à la fois :
- en translation autour d'un axe fictif parallèle à l'axe de rotation du support et,
- également en rotation autour du centre de gravité de ladite masse pendulaire, un tel mouvement étant encore appelé « mouvement combiné » et divulgué par exemple dans la demande DE 10 2011 086 532.

Dans tout ce qui précède, le support peut être réalisé d'une seule pièce, étant par exemple entièrement métallique.

L'invention a encore pour objet, selon un deuxième aspect, un dispositif d'amortissement pendulaire pour système de transmission, comprenant ;
- un support mobile autour d'un axe de rotation,
- au moins un corps pendulaire, mobile par rapport au support et,
- un système d'atténuation du bruit se produisant lors d'un choc du corps pendulaire contre le support, ce système étant formé par un revêtement déposé sur le support de manière à amortir le choc entre le support et le corps pendulaire.

Le revêtement peut être du Deltaflon^{™} commercialisé par la société Fluorotechnique^{(R)}. Similairement à ce qui a été mentionné précédemment, ce revêtement peut être appliqué sur le support par projection, par électrolyse ou par phase vapeur. Ce revêtement peut alors ne pas être associé à la couche en plastique et la pièce de serrage mentionnées précédemment. Le revêtement, le cas échéant appliqué de chaque côté du support, peut alors former à lui seul le système d'atténuation du bruit. Tout ou partie des caractéristiques mentionnées dans le cadre du premier aspect peut encore s'appliquer à ce deuxième aspect.

L'invention a encore pour objet, selon un troisième aspect, un composant pour système de transmission d'un véhicule automobile, le composant étant notamment un double volant amortisseur, un convertisseur de couple hydrodynamique, un volant solidaire du vilebrequin, ou un disque de friction d'embrayage ou un double embrayage à sec ou humide, ou un composant de système de transmission hybride, ou un simple embrayage humide, ce composant comprenant un dispositif d'amortissement pendulaire tel que défini ci-dessus.

Le support du dispositif d'amortissement pendulaire peut alors être l'un parmi :
- un voile du composant,
- une rondelle de guidage du composant,
- une rondelle de phasage du composant, ou
- un support distinct dudit voile, de ladite rondelle de guidage et de ladite rondelle de phasage.

Dans le cas où le dispositif est intégré à un volant solidaire du vilebrequin, le support peut être solidaire de ce volant.

Le composant est notamment un disque de friction d'embrayage ou un double volant amortisseur.

Le composant peut comprendre un sous-ensemble apte à transmettre le couple moteur se propageant dans le système de transmission.

La pièce de serrage peut permettre la connexion du support du dispositif d'amortissement pendulaire à ce sous-ensemble. On attribue ainsi à cette pièce de serrage une fonction additionnelle, de sorte que le nombre de pièces est réduit. La pièce de serrage est par exemple la portion d'extrémité d'une tôle de connexion du dispositif d'amortissement pendulaire au sous-élément. Dans le cas où le composant est un double volant amortisseur, le sous-élément peut être le volant secondaire du double volant amortisseur. Dans le cas où le composant est un disque de friction d'embrayage, le sous-élément est par exemple le support des garnitures.

Les vis ou rivets mentionnés précédemment qui permettent de serrer axialement la couche en plastique peuvent alors également contribuer à la fixation du support au sous-élément.

En variante, la pièce de serrage ne permet pas la connexion du support du dispositif d'amortissement pendulaire à ce sous-ensemble, n'étant reliée à rien d'autre qu'au support.

L'invention pourra être mieux comprise à la lecture de la description qui va suivre d'exemples et à l'examen du dessin annexé sur lequel :
- la figure 1 représente un dispositif d'amortissement pendulaire selon un premier exemple de mise en oeuvre de l'invention,
- la figure 2 est une vue en coupe dans un plan contenant l'axe de rotation du support du dispositif de la figure 1,
- la figure 3 représente un dispositif d'amortissement pendulaire selon un deuxième exemple de mise en oeuvre de l'invention,
- la figure 4 est une vue en coupe dans un plan contenant l'axe de rotation du support du dispositif de la figure 3, et
- la figure 5 représente une variante s'appliquant aussi bien au dispositif selon le premier exemple de mise en oeuvre de l'invention qu'au dispositif selon le deuxième exemple de mise en oeuvre de l'invention, et
- la figure 6 est une vue d'un détail de la figure 5.

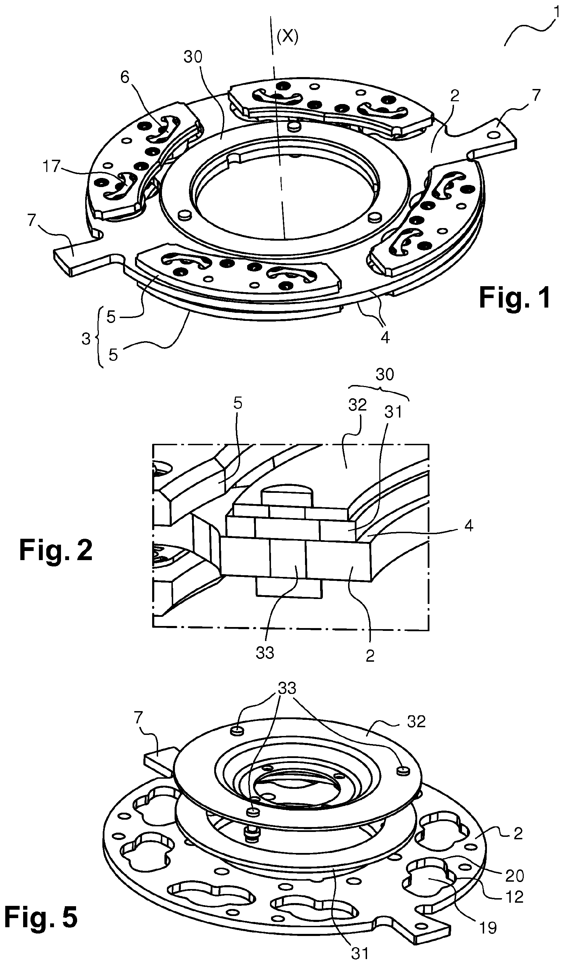

On a représenté sur la figure 1 un dispositif d'amortissement pendulaire 1 selon un premier exemple de mise en oeuvre de l'invention. Le dispositif 1 fait ici partie d'un composant d'un système de transmission étant un double volant amortisseur. Dans des variantes non représentées, ce composant pourrait être un convertisseur de couple hydrodynamique, un volant solidaire du vilebrequin, un double embrayage à sec ou humide, ou un disque de friction d'embrayage.

Ce composant peut faire partie d'une chaîne de propulsion d'un véhicule automobile, cette dernière comprenant un moteur thermique notamment à deux, trois ou quatre cylindres.

Sur la figure 1, le dispositif 1 est au repos, c'est-à-dire qu'il ne filtre pas les oscillations de torsion transmises par la chaîne de propulsion du fait des acyclismes du moteur thermique.

Le double volant amortisseur forme de manière connue un amortisseur de torsion présentant un volant primaire d'entrée, un volant secondaire de sortie, et des organes de rappel élastique à action circonférentielle qui sont interposés entre lesdits volants. Au sens de la présente demande, les termes « entrée » et « sortie » sont définis par rapport au sens de transmission du couple depuis le moteur thermique du véhicule vers les roues de ce dernier.

Le dispositif 1 comprend dans l'exemple considéré:
- un support 2 apte à se déplacer en rotation autour d'un axe X, et
- une pluralité de corps pendulaires 3 mobiles par rapport au support 2.

Dans l'exemple considéré, quatre corps pendulaires 3 sont prévus, étant répartis de façon uniforme sur le pourtour de l'axe X.

Dans l'exemple représenté sur les figures 1 à 4, le support 2 est un voile faisant partie du volant secondaire du double volant amortisseur.

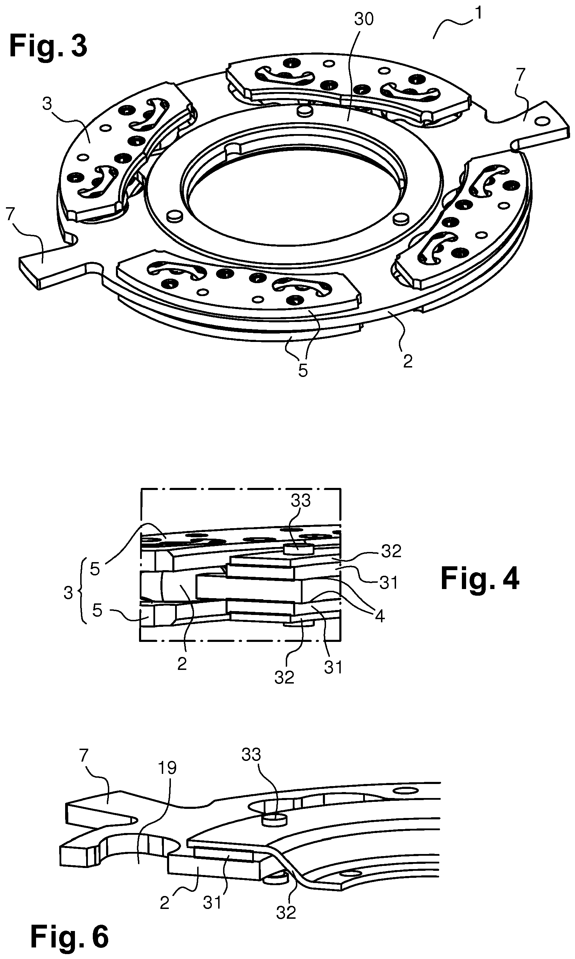

Dans l'exemple des figures 5 et 6, le support 2 est un flasque rigidement connecté au voile du volant secondaire du double volant amortisseur, comme on le verra par la suite.

Dans l'exemple considéré, le support 2 présente globalement une forme d'anneau comportant deux côtés opposés 4 qui sont ici des faces planes.

Comme on peut le voir sur les figures, chaque corps pendulaire 3 comprend dans l'exemple considéré :
- deux masses pendulaires 5, chaque masse pendulaire 5 s'étendant axialement en regard d'un côté 4 du support 2, et
- deux organes de liaison 6 solidarisant les deux masses pendulaires 5.

Les organes de liaison 6, encore appelés « entretoises », sont dans l'exemple considéré décalés angulairement.

Dans l'exemple des figures, chaque extrémité d'un organe de liaison 6 est emmanchée en force dans une ouverture 17 ménagée dans une des masses pendulaires 5 du corps pendulaire 3, de manière à solidariser entre elles ces deux masses pendulaires 5.

Chaque organe de liaison 6 s'étend en partie dans une fenêtre 19 ménagée dans le support. Dans l'exemple considéré, la fenêtre 19 définit un espace vide à l'intérieur du support, cette fenêtre étant délimitée par un contour fermé 20.

Comme on peut le voir sur la figure 1 notamment, le support 2 représenté sur les figures définit des pattes 7 venant interagir avec les organes de rappel élastique non représentés du double volant amortisseur.

Le dispositif 1 comprend encore dans l'exemple considéré des organes de roulement non représentés et guidant le déplacement des corps pendulaires 3 par rapport au support 2. Les organes de roulement sont par exemple des rouleaux.

Dans l'exemple décrit, le mouvement par rapport au support 2 de chaque corps pendulaire 3 est guidé par deux organes de roulement, chacun d'entre eux coopérant dans l'exemple des figures avec l'un des organes de liaison 6 du corps pendulaire 3.

Chaque organe de roulement coopère ici avec une seule première piste de roulement 12 solidaire du support 2, et avec une seule deuxième piste de roulement solidaire du corps pendulaire 3 pour guider le déplacement du corps pendulaire 3.

Dans l'exemple considéré, chaque deuxième piste de roulement est formée par une portion du bord radialement extérieur d'un organe de liaison 6.

Chaque première piste de roulement 12 est définie par une partie du contour d'une fenêtre 19 ménagée dans le support 2 et recevant l'un des organes de liaison 6.

Chaque première piste de roulement est ainsi disposée radialement en regard d'une deuxième piste de roulement, de sorte qu'une même surface de roulement d'un organe de roulement roule alternativement sur la première piste de roulement 12 et sur la deuxième piste de roulement. La surface de roulement de l'organe de roulement est ici un cylindre de rayon constant.

Les figures 1 et 2 représentent un dispositif d'amortissement pendulaire 1 selon un premier exemple de mise en oeuvre de l'invention. Selon le premier exemple de mise en oeuvre ainsi représenté, le support 2 comprend un système d'atténuation 30 du bruit se produisant lors d'un choc de chaque corps pendulaire 3 contre le support 2. Ce système 30 n'est disposé ici que d'un seule côté du support, comprenant alors une seule couche en plastique 31 serrée axialement entre le support 2 et une seule pièce de serrage 32.

La couche en plastique 31 est par exemple réalisée en élastomère.

Le plastique est par exemple de l'élastomère. La pièce de serrage 32 est par exemple une tôle, pouvant être réalisée en acier.

On observe sur les figures 1 et 2 que la dimension axiale de la couche en plastique 31 est supérieure à celle de la pièce de serrage 32. On observe également que chacune de la couche en plastique 31 et de la pièce de serrage 32 s'étend ici de manière continue autour de l'axe de rotation X, formant un anneau.

Dans l'exemple représenté sur la figure 2, la pièce de serrage 32 présente un rayon intérieur sensiblement égal au rayon intérieur de la couche en plastique 31 et encore sensiblement égal au rayon intérieur du support 2.

Le serrage axial de la couche en plastique 31 est dans l'exemple considéré obtenu lors de la fixation de la pièce de serrage 32 sur le support 2 via des rivets 33 alors que la couche en plastique 31 a été préalablement positionnée entre le support 2 et la pièce de serrage 32. Trois rivets 33 répartis de manière uniforme autour de l'axe X sont ici prévus.

Dans une variante non représentée, la couche en plastique 31 est surmoulée sur les rivets 33 et ces derniers sont ensuite rivetés sur le support 2 et sur la pièce de serrage 32.

Cette couche en plastique 31 est ici positionnée radialement intérieurement par rapport au corps pendulaire 3, formant une butée pour le déplacement radialement vers l'intérieur de la masse pendulaire 5 disposé du même côté 4 du support que cette couche en plastique 31.

On va maintenant décrire en référence aux figures 3 et 4 un dispositif d'amortissement pendulaire 1 selon un deuxième exemple de mise en oeuvre de l'invention. Le dispositif d'atténuation 30 du bruit s'étend ici d'une part du premier côté du support 2 et d'autre part du deuxième côté du support 2.

Le dispositif 30 comprend alors:
- une couche en plastique 31 disposée axialement du premier côté du support et serrée axialement entre ce premier côté et une première pièce de serrage 32, et
- une couche en plastique 31 disposée axialement du deuxième côté du support 2 et serrée axialement entre ce deuxième côté et une deuxième pièce de serrage 32.

Selon ce deuxième exemple de mise en oeuvre, on observe ainsi successivement, lorsque l'on se déplace axialement comme représenté sur la figure 4: une pièce de serrage 32 disposée du premier côté du support 2, une couche en plastique 31 disposée du premier côté du support 2, le support 2, une couche en plastique 31 disposée du deuxième côté du support 2, et une pièce de serrage 32 disposée du deuxième côté du support 2.

Le serrage axial de chaque couche en plastique 31 peut s'effectuer via un seul et même jeu de rivets 33, ces derniers étant d'une part rivetés sur la première pièce de serrage 32 et d'autre part sur la deuxième pièce de serrage 32.

Similairement à ce qui a été décrit en rapport au premier exemple de mise en oeuvre, chaque couche en plastique 31 peut ici être positionnée radialement intérieurement par rapport au corps pendulaire 3, formant une butée pour le déplacement radialement vers l'intérieur de la masse pendulaire 5 disposé du même côté 4 du support que cette couche en plastique 31.

Sur les figures 1 à 4, les corps pendulaires 3 sont disposés radialement intérieurement par rapport aux organes de rappel élastique et la connexion du support au reste du volant secondaire s'effectue via des moyens de liaison tels que des vis ou rivets.

L'exemple des figures 5 et 6, qui s'applique aussi bien à un dispositif d'amortissement pendulaire selon le premier exemple de mise en oeuvre que selon le deuxième exemple de mise en oeuvre, diffère de ce qui vient d'être décrit en ce que la pièce de serrage 32 permet la connexion du support 2 au reste du volant secondaire. La pièce de serrage 32 est par exemple la portion d'extrémité d'une tôle de connexion du dispositif d'amortissement pendulaire au reste du volant secondaire.

Le dispositif d'amortissement pendulaire 1 des figures 5 et 6 pourrait présenter des corps pendulaires radialement au niveau des organes de rappel élastique du double volant amortisseur, ou disposés radialement extérieurement par rapport à ces organes de rappel élastique.

L'invention n'est pas limitée à ce qui vient d'être décrit.

En particulier, bien que sur l'ensemble des figures, le dispositif 1 soit dépourvu d' organes d'amortissement de butée interposé entre chaque organe de liaison 6 et le bord radialement intérieur de la fenêtre correspondante 19 pour venir simultanément en contact avec cet organe de liaison 6 et le support 2 dans certaines positions relatives du support 2 et d'un corps pendulaire 3, telles que les positions de venue en butée à l'issue d'un déplacement depuis la position de repos pour filtrer une oscillation de torsion, de tels organes d'amortissement de butée pourraient être prévus.

## Revendications

1. Dispositif d'amortissement pendulaire (1) pour système de transmission, comprenant :
- un support (2) mobile autour d'un axe de rotation (X),
- au moins un corps pendulaire (3), mobile par rapport au support (2) et,
- un système d'atténuation (30) du bruit se produisant lors d'un choc du corps pendulaire (3) contre le support (2), comprenant une couche en plastique (31) serrée axialement entre le support (2) et une pièce de serrage (32).

2. Dispositif selon la revendication 1, la couche en plastique (31) s'étendant de manière continue autour de l'axe de rotation (X) et la pièce de serrage (32) s'étendant également de façon continue autour de cet axe de rotation (X).

3. Dispositif selon la revendication 1 ou 2, le serrage axial de la couche en plastique (31) étant obtenu par vissage ou rivetage de la pièce de serrage (32) avec le support (2) alors que la couche en plastique (31) est positionnée entre le support (2) et la pièce de serrage (32).

4. Dispositif selon la revendication 1 ou 2, le serrage axial de la couche en plastique (31) étant obtenu par rivetage d'une ou plusieurs entretoises (33) sur le support (2) et/ou sur la pièce de serrage (32), la couche en plastique (31) ayant préalablement été surmoulée sur cette ou ces entretoises (33).

5. Dispositif selon l'une quelconque des revendications précédentes, la couche en plastique (31) n'étant disposée axialement que d'un côté du support (2).

6. Dispositif selon l'une quelconque des revendications 1 à 4, comprenant :
- une couche en plastique (31) disposée axialement du premier côté du support et serrée axialement entre ce premier côté (4) et une première pièce de serrage (32), et
- une couche en plastique (31) disposée axialement du deuxième côté du support et serrée axialement entre ce deuxième côté (4) et une deuxième pièce de serrage (32).

7. Dispositif selon l'une quelconque des revendications précédentes, le corps pendulaire (3) comprenant une première masse pendulaire (5) disposée axialement du premier côté (4) du support et une deuxième masse pendulaire (5) disposée axialement du deuxième côté (4) du support, et au moins un organe de liaison (6) de la première masse pendulaire et de la deuxième masse pendulaire.

8. Dispositif selon la revendication 7, le support (2) portant au moins une pièce d'interposition axiale disposée axialement en regard de la première masse pendulaire ou de la deuxième masse pendulaire, cette pièce d'interposition axiale étant notamment un revêtement déposé sur le support.

9. Dispositif selon l'une quelconque des revendications précédentes, la couche en plastique (31) étant positionnée radialement à l'intérieur du corps pendulaire (3) et formant une butée pour le déplacement radialement vers l'intérieur de ce corps pendulaire (3).

10. Dispositif selon l'une quelconque des revendications précédentes, le système d'atténuation (30) du bruit étant porté par le support (2), étant notamment fixé sur le support (2).

11. Composant pour système de transmission d'un véhicule automobile, le composant étant notamment un double volant amortisseur, un convertisseur de couple hydrodynamique, un volant solidaire du vilebrequin, un double embrayage à sec ou humide, ou un simple embrayage humide ou un composant de système de transmission hybride, ou un disque de friction, comprenant un dispositif d'amortissement (1) selon l'une quelconque des revendications 1 à 10.

12. Composant selon la revendication 11, comprenant un sous-ensemble apte à transmettre le couple moteur se propageant dans le système de transmission, la pièce de serrage (32) permettant la connexion du support (2) du dispositif d'amortissement pendulaire (1) à ce sous-ensemble.

13. Composant selon la revendication 11, comprenant un sous-ensemble apte à transmettre le couple moteur se propageant dans le système de transmission, la pièce de serrage (32) ne permettant pas la connexion du support du dispositif d'amortissement pendulaire à ce sous-ensemble.

14. Dispositif d'amortissement pendulaire pour système de transmission, comprenant ;
- un support mobile autour d'un axe de rotation,
- au moins un corps pendulaire, mobile par rapport au support et,
- un système d'atténuation du bruit se produisant lors d'un choc du corps pendulaire (3) contre le support (2), ce système étant formé par revêtement déposé sur le support (2) de manière à amortir le choc entre le support et le corps pendulaire.
